# EUROPEAN PATENT SPECIFICATION

(11) **EP 4 098 850 B1**
(45) Date of publication and mention of the grant of the patent: **01.01.2025**
(21) Application number: 21290032.8
(22) Date of filing: 31.05.2021
(51) Int. Cl.: F01M 5/00, F01M 1/10, F01M 1/16, F02M 31/07, F02M 37/00, F02M 37/30, F16K 27/04, B01D 46/42

(54) **ELECTROHYDRAULIC THERMOSTAT SYSTEM, FILTER DEVICE AND METHOD FOR CONTROLLING A TEMPERATURE OF A WORKING FLUID**
ELEKTROHYDRAULISCHES THERMOSTATSYSTEM, FILTERVORRICHTUNG UND VERFAHREN ZUR REGELUNG DER TEMPERATUR EINES ARBEITSFLUIDS
SYSTÈME DE THERMOSTAT ÉLECTROHYDRAULIQUE, DISPOSITIF FILTRANT ET PROCÉDÉ DE RÉGULATION DE LA TEMPÉRATURE D'UN FLUIDE DE TRAVAIL

(43) Date of publication of application: 07.12.2022
(73) Proprietor: MANN+HUMMEL GmbH, 71636 Ludwigsburg (DE)
(72) Inventor: Kagitha, Lavanya, 71634 Ludwigsburg (DE); Talmon-Gros, Dietmar, 71720 Oberstenfeld (DE); Trautmann, Pius, 70499 Stuttgart (DE); Sradnick, Holger, 71254 Ditzingen (DE); Loebard, Frank, 70327 Stuttgart (DE); Rehák, Ivo, 66501 Rosice (CZ); Tuma, Michal, 53901 Hlinsko v Cechach (CZ); Migaud, Jérôme, 35500 Vitré (FR); Zenner, Julien, 53940 Ahuille (FR)
(74) Representative: Mann + Hummel Intellectual Property

(56) References cited:
- WO-A1-2015/172792
- WO-A1-2018/103870
- DE-A1- 102015 224 387
- DE-A1- 102016 207 653
- FR-A3- 3 066 536
- US-A1- 2015 159 774

## Description

### Technical field

The present invention relates to an electrohydraulic thermostat system, a filter device comprising such an electrohydraulic thermostat system and a method for controlling a temperature of a working fluid.

### Prior art

An internal combustion engine can have a fluid circuit, for example an oil circuit or a fuel circuit. A working fluid, for example oil or fuel, circulates in the fluid circuit. Depending on the operational conditions of the engine, it can be necessary to cool or to heat the working fluid. This can be done by means of a heat exchanger or heater. Furthermore, a bypass for bypassing the heat exchanger or heater can be provided. To guide the working fluid either to the heat exchanger or heater or to bypass the heat exchanger or heater, a thermostat system can be provided. The thermostat system can comprise a wax motor or a solenoid valve. WO2015/172792A1 discloses a thermostat system, according to the preamble of claim 1.

### Disclosure of the invention

Against this background, it is one object of the present invention to provide an improved electrohydraulic thermostat system.

Accordingly, an electrohydraulic thermostat system for a filter device is provided. The electrohydraulic thermostat system comprises a main valve and a pilot valve, wherein the main valve comprises a valve body which is arranged in a receiving section of a housing, wherein the valve body subdivides the receiving section into a fluid distribution chamber, which receives a pressurized fluid through a pressure line and is configured to distribute a working fluid to an inflow line of a component for changing a temperature of the working fluid and/or to a bypass line for bypassing the component, and a control chamber, wherein the pilot valve is configured to cause a pressure difference between the fluid distribution chamber and the control chamber as a function of the temperature of the working fluid so that the working fluid moves the valve body in the receiving section due to the pressure difference for opening and closing the inflow line and/or the bypass line.

Due to the valve body being moved by the working fluid itself, the pilot valve can be downsized compared to known solenoid valves. Thus, the electrohydraulic thermostat system is cheaper and consumes less energy compared to a solenoid valve. Furthermore, the electrohydraulic thermostat system reacts faster and can operate in a wider temperature range than a wax motor. The quick reaction of the electrohydraulic thermostat system allows to keep the working fluid in a working temperature range that helps to fulfill the viscosity requirements of the working fluid in the best possible way. This contributes to fuel savings of an engine with such an electrohydraulic thermostat system.

The filter device can be an oil filter or fuel filter, for example. The electrohydraulic thermostat system can be part of the filter device. "Pilot" in this context means that the pilot valve pilots or controls the main valve. In other words, the function of the main valve is dependent on the pilot valve. "Electrohydraulic" in this context means that the electrohydraulic thermostat system has both, an electric and a hydraulic functionality. The electric functionality is assigned to the pilot valve that is preferably an electromagnetic valve. In particular, the pilot valve has a movable piston and a coil or magnet for actuating the piston. The hydraulic functionality is assigned to the main valve, the valve body thereof being moved by means of the pressurized working fluid.

The receiving section preferably is a bore that is provided in the housing. The housing can be part of the electrohydraulic thermostat system or of the filter device. The valve body can be moved inside the receiving section in a linear way. The bypass line and the inflow line have openings that discharge into the receiving section, in particular into the fluid distribution chamber. The valve body covers the bypass line to close it. In the same way, the valve body covers the inflow line to close it.

"Subdividing" the receiving section into the fluid distribution chamber and the control chamber in this context means that the valve body is at least partly sandwiched between the fluid distribution chamber and the control chamber. However, this does not exclude that the fluid distribution chamber and the control chamber are fluidly connected to each other. "Distributing" the working fluid can mean that either all the working fluid is guided into the bypass line, all the working fluid is guided into the inflow line or that the working fluid is split and guided into the bypass line as well as into the inflow line.

The component for changing the temperature of the working fluid can be a heater or a heat exchanger, for example. The component is configured to extract heat from the working fluid and/or to apply heat to the working fluid. The temperature of the working fluid is controlled by guiding at least a part of the working flow through the component. The electrohydraulic thermostat system is thus suitable for controlling the temperature of the working fluid.

The electrohydraulic thermostat system can be brought from a switch off mode, in which the pressure in the fluid distribution chamber and the control chamber is equal, into a bypass mode, in which the bypass line is completely open and the inflow line is completely closed, a control mode, in which the bypass line and the inflow line are at least partly open, and a working mode in which the bypass line is completely closed and the inflow line is completely open. In the control mode, the position of the valve body changes depending on the pressure difference and thus as a function of the temperature of the working fluid.

Preferably, the pressure difference is a pressure drop. That means that the pilot valve is suitable of reducing the pressure in the control chamber. For example, this can be done by opening a drain line to a low-pressure region, in particular to a reservoir. The revervoir can be under atmospheric or close to atmospheric pressure. The pressure difference is a function of the temperature of the working fluid. This means that an increase of the temperature of the working fluid leads to an increase of the pressure difference. Preferably, a decrease of the temperature of the working fluid leads to a decrease of the pressure difference. The higher the temperature of the working fluid, the more working fluid is fed into the inflow line. The lower the temperature of the working fluid, the more working fluid is fed into the bypass line. This is valid for the case that the component is a heat exchanger for cooling the working fluid. When the pressure in the control chamber is released by means of the pilot valve, the pressurized working fluid in the fluid distribution chamber moves the valve body.

In embodiments, in a bypass mode of the electrohydraulic thermostat system, the valve body completely closes the inflow line and opens the bypass line to guide the working fluid into the bypass line. In the bypass mode, the component is bypassed so that no heat is extracted from or applied to the working fluid. The bypass mode can be used when an engine comprising such an electrohydraulic thermostat system is running under normal conditions.

In embodiments, in a working mode of the electrohydraulic thermostat system, the valve body completely closes the bypass line and opens the inflow line to guide the working fluid into the inflow line. The working mode can be called cooling mode or cooler mode. In the working mode, all the working fluid is guided to the component to extract heat therefrom or to apply heat to the working fluid.

In embodiments, in a control mode of the electrohydraulic thermostat system, the valve body opens the inflow line and the bypass line to guide the working fluid into the inflow line and the bypass line. The volume flow of working fluid to the inflow line and to the bypass line is controlled on basis of the temperature of the working fluid to keep the temperature in a preset temperature range.

In embodiments, the pilot valve is configured to open and to close a drain line to a reservoir as a function of the temperature of the working fluid to generate the pressure difference between the fluid distribution chamber and the control chamber. The reservoir is a low-pressure area. That means that the working fluid is not pressurized in the reservoir. The reservoir can be a tank or the like.

In embodiments, the pilot valve comprises a piston for opening and closing the drain line, wherein the piston closes the drain line in an initial state of the pilot valve, and wherein the piston opens the drain line in an energized state of the pilot valve. The piston has a coil or magnet for moving the piston. The piston can be moved binary. In other words, the drain line can be either closed completely or opened completely. Also, an adjustment to intermediate pressure levels is possible. Intermediate switching positions can be set. Alternatively or additionally, a pulsed actuation of the piston is possible.

According to the invention, the valve body comprises a divider plate which subdivides the receiving section into the fluid distribution chamber and the control chamber. In a preferred embodiment the divider plate comprises a controlled leakage gap for pressure equalization between the fluid distribution chamber and the control chamber. The controlled leakage gap allows pressure equalization when the drain line is closed by means of the piston of the pilot valve.

According to the invention, the divider plate has a predetermined radial clearance against the receiving section, wherein the predetermined radial clearance creates a controlled leakage gap for pressure equalization between the fluid distribution chamber and the control chamber.

In another embodiment the inflow line and the bypass line are fluidically connected with the fluid distribution chamber at axially spaced positions. This enables the inflow line and the bypass line to be efficiently selectively closed and/or opened by the axial movement of the valve body.

In another embodiment the valve body can comprise a fail safe opening that allows an auxilary flow of the working fluid to the inflow line in an axial position of the valve body that corresponds to the inflow line being actually closed. This allows to provide at least a small volume flow to the component for changing a temperature of the working fluid (e.g. a heater or cooler) in case of a malfuction of the pilot valve, especially when the pilot valve in stuck in its closed position. The failsafe opening can be arranged axially neighbouring the divider plate and can be provided as a radial opening of the valve body.

In embodiments, the valve body is at least partially hollow and comprises at least one radial outlet. Preferably the valve body comprises a first outlet opening, which is assigned to the inflow line, and a radial second outlet opening which is assigned to the bypass line. Preferably, the valve body has the shape of a hollow cylinder. The outlet openings break through a wall of this cylinder shape. One front face of the valve body is open and the other front face is closed by means of the divider plate. The working fluid discharges into the open front face.

In a preferred embodiment the valve body comprises two axially spaced cylinder shells, wherein the at least one radial outlet opening is arranged between the two axially spaced cylinder shells. The axially spaced cylinder shells can be connected by suitable force transmitting means, e.g. a plurality of axial struts. This is especially advategeous in combination with the embodiment that has the the inflow line and the bypass line being fluidically connected with the fluid distribution chamber at axially spaced positions as an axial movement of the valve body then selectively allows to close the inflow line and/or the bypass line when aligned with one of the cylinder shells or to open the inflow line and/or the bypass line when aligned with the at least one radial outlet opening.

In a preferred embodiment the fail safe opening can be arranged axially between one of the cylinder shells and the divider plate. In embodiments, the electrohydraulic thermostat further comprises an elastic element which biases the valve body against a pressure of the working fluid. The elastic element can be a spring, in particular a pressure spring. When the pilot valve closes the drain line, pressure equalizes in the fluid distribution chamber and in the control chamber so that the elastic element moves the valve body back into the switch off mode.

In embodiments, the elastic element is arranged inside the control chamber. Thus, the elastic element is bathed in the working fluid. Alternatively, the elastic element can be placed outside the control chamber.

In embodiments, the electrohydraulic thermostat system further comprises a temperature sensor and/or a control unit for operating the pilot valve. The pilot valve is controlled in a closed loop. The control unit can be an electronic control unit (ECU) that operates the pilot valve as a function of a signal received from the temperature sensor to achieve a certain axial position of the valve body in the receiving section. The correlation between a given temperature, the desired axial position of the valve body and the corresponding operational state of the pilot valve can be stored in data maps within the ECU. The pilot valve can be operated in a binary manner (open or closed) and optionally cyclically with varying frequency.

In an equally preferred embodiment the electrohydraulic thermostat system comprises at least one sensor being adapted for determining a position of the valve body in the receiving section. Any sensors that allow for the determination of an axial position of the valve body can be used, e.g. hall sensor, magneto resistive sensor (MGR), pressure sensor, mechanically coupled linear displacement sensor (linear sensor), optical sensor and/or ultrasonic sensor.

Preferably and depending on the sensor concept the sensor comprises a first sensor part arranged on the valve body and a second sensor part arranged on the housing, i.e. the sensor being a "divided sensor".

The first sensor part being arranged on the valve body can be a magnet and the second sensor part arranged on the housing can be a hall or MGR sensor. The first sensor part can be preferably arranged at the divider plate of the valve body and the second sensor part can be preferably arranged on an opposing part of the housing.

Alternatively a linear sensor directly attached to the valve body detecting the relative movement of the valve to the the housing, an optical sensor or a ultrasonic sensor detecting the relative movement of the vavle body in comparison to an opposing part of the housing can be used as non-divided sensors.

The sensor can be coupled to the control unit so as to give back a value of the current axial position of the valve body and allow for a closed control loop, what increases the positioning accuracy of the valve body and allows for an easy detection of malfunctions.

Furthermore, a filter device is provided. The filter device comprises an electrohydraulic thermostat system as explained before, a component for changing a temperature of a working fluid, wherein the component is arranged downstream of the electrohydraulic thermostat system, a filter for filtering the working fluid, wherein the filter is arranged downstream of the component, an inflow line which connects the component to the electrohydraulic thermostat system, and a bypass line which bypasses the component.

As explained before, the component can be a heater, a heat exchanger or the like. The filter device can be an oil filter device or a fuel filter device, for example.

Moreover, a method for controlling a temperature of a working fluid by means of an electrohydraulic thermostat system is provided, wherein the electrohydraulic thermostat system comprises a main valve and a pilot valve, wherein the main valve comprises a valve body which is arranged in a receiving section of a housing, and wherein the valve body subdivides the receiving section into a fluid distribution chamber, which is configured to distribute a working fluid to an inflow line of a component for changing a temperature of the working fluid and/or to a bypass line for bypassing the component, and a control chamber, the method comprising the following steps: a) generating a pressure difference between the fluid distribution chamber and the control chamber as a function of the temperature of the working fluid by means of the pilot valve, b) moving the valve body in the receiving section due to the pressure difference for opening and closing the inflow line and/or the bypass line by means of the working fluid, and c) controlling the temperature of the working fluid by means of the component.

Preferably, in step a) a pressure drop is generated. This means that the pressure in the control chamber is lower than in the fluid distribution chamber. Due to the lower pressure in the control chamber, the working fluid can move the valve body to either open the inflow line and close the bypass line, to close the inflow line and open the bypass line or to open both, the bypass line and the inflow line. When the bypass line and the inflow line are both open, the distribution of the working fluid to the inflow line and the bypass line is done as a function of the temperature to keep the temperature of the working fluid in a preset temperature range.

In Embodiments, in step b) the working fluid moves the valve body against a spring force of an elastic element. An equilibrium is established between the pressure of the working fluid and a spring force of the elastic element.

In Embodiments, in step c) the component applies heat to the working fluid or extracts heat from the working fluid to control the temperature of the working fluid. "Control" in this context means that the temperature of the working fluid is kept in the preset temperature range.

### Short description of the drawings

The figures show:
Fig. 1 a schematic view of one embodiment of a filter device;
Fig. 2 a schematic view of one embodiment of an electrohydraulic thermostat system for the filter device according to Fig. 1;
Fig. 3 a further schematic view of the electrohydraulic thermostat system according to Fig. 2;
Fig. 4 a further schematic view of the electrohydraulic thermostat system according to Fig. 2;
Fig. 5 a further schematic view of the electrohydraulic thermostat system according to Fig. 2; and
Fig. 6 a schematic block diagram of one embodiment of a method for controlling the temperature of a working fluid of the filter device according to Fig. 1.

In the figures, identical or functionally identical elements have been given the same reference signs unless otherwise indicated.

### Embodiment(s) of the invention

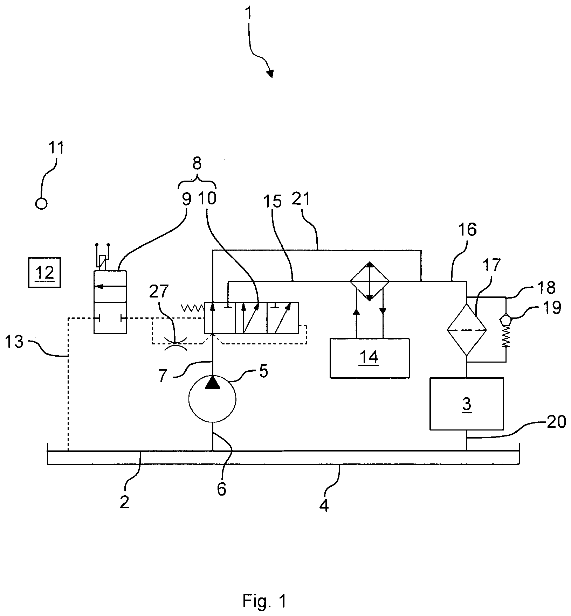

Fig. 1 shows an embodiment of a filter device 1. The filter device 1 is configured to supply a working fluid 2 to a system 3. The system 3 can be an internal combustion engine. The working fluid 2 can be motor oil. However, the working fluid 2 can be any other liquid like water, fuel or the like. The filter device 1 is designed to filter the working fluid 2 before supplying it to the system 3. In the case that the working fluid 2 is motor oil, the filter device 1 is an oil filter system or can be named oil filter system.

The filter device 1 comprises a reservoir 4 that is at least partly filled with the working fluid 2. The reservoir 4 can be a tank, an oil sump or the like. In the reservoir 4, the working fluid 2 is under low pressure, preferably under ambient pressure. A pump 5 is provided for taking in the working fluid 2 by means of an intake line 6. The pump 5 pressurizes the working fluid 2 and supplies it to a pressure line 7.

By means of the pressure line 7, the working fluid is supplied to an electrohydraulic thermostat system 8. The electrohydraulic thermostat system 8 comprises a pilot valve 9 and a main valve 10. The pilot valve 9 is an electromagnetic valve. A temperature sensor 11 is assigned to the pilot valve 9. The temperature sensor 11 is configured to measure a temperature of the working fluid 2. Furtermore, a control unit 12 can be provided. The control unit 12 is configured to control the pilot valve 9 based on temperature signals from the temperature sensor 11.

The pressure line 7 supplies the working fluid 2 to the main valve 10. The main valve 10 will be explained later. The pilot valve 9 is interposed in a drain line 13 that is guided from the main valve 10 to the reservoir 4. By means of the drain line 13, the working fluid 2 can be discharged into the reservoir 4.

The filter device 1 has a component 14 for influencing or changing a temperature of the working fluid 2. The component 14 can be a heat exchanger or a heater, for example. In the following, the component is named heat exchanger 14. The heat exchanger 14 is suitable for exchanging heat between the working fluid 2 and a cooling fluid. The cooling fluid can be water, any other liquid or air. An inflow line 15 connects the main valve 10 to the heat exchanger 14. A discharge line 16 connects the heat exchanger 14 to a filter 17. The filter 17 can be an oil filter or a fuel filter. The filter 17 can be bypassed by a bypass line 18. The bypass line 18 has a check valve 19. The system 3 is connected to the reservoir 4 by means of a discharge line 20. A further bypass line 21 is provided that bypasses the heat exchanger 14. The bypass line 21 starts at the main valve 10 and discharges into the discharge line 16.

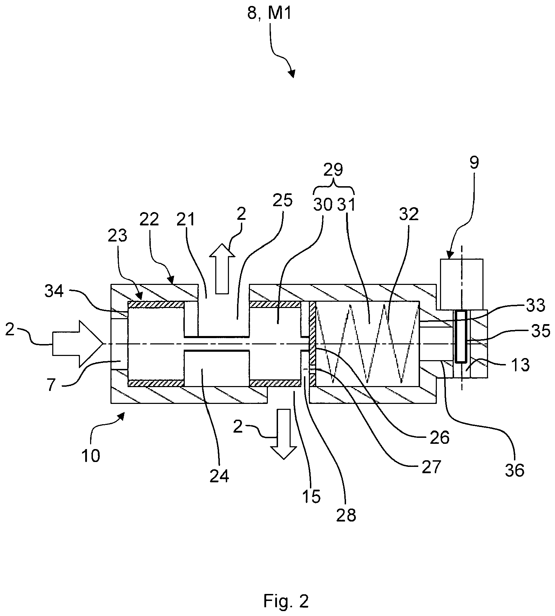

Fig. 2 shows a schematic view of one embodiment of the electrohydraulic thermostat system 8. The electrohydraulic thermostat system 8 has a housing 22. The housing 22 can be part of an oil filter module (not shown), for example. The lines 7, 13, 15 and 21 end or start at the housing 22.

The main valve 10 has a valve body 23 that is received in the housing 22. The valve body 23 is shaped in the form of a hollow cylinder. A front side of the valve body 23 facing the pressure line 7 is open so that the working fluid 2 coming from the pump 5 can enter the valve body 23. The valve body 23 is provided with a first outlet opening 24, which can be connected to the inflow line 15 of the heat exchanger 14, and a second outlet opening 25 that can be connected to the bypass line 21.

A front side of the valve body 23 facing away from the pressure line 7 is closed by means of a divider plate 26. The divider plate 26 is provided with a controlled leakage gap 27. The controlled leakage gap 27 can be a bore. Next to the divider plate 26, a fail safe opening 28 is provided in the valve body 23.

The housing 22 has a receiving section 29 in form of a bore that receives the valve body 23. By means of the divider plate 26, the receiving section 29 is divided into a fluid distribution chamber 30 and a control chamber 31. An elastic element 32, in particular a compression spring, is received in the control chamber 31. The elastic element 32 rests on one side on the divider plate 26 and on its other side on a shoulder 33 of the housing 22. The elastic element 32 is configured to press the valve body 23 against a shoulder 34 of the housing. The shoulders 33, 34 face each other.

The pilot valve 9 is at least partly received in the housing 22. However, the pilot valve 9 can be arranged at any arbitrary position along the drain line 13. The pilot valve 9 has a piston 35 that is axially displaceable to open and to close the drain line 13. The drain line 13 is connected to the control chamber 31 by means of a bore 36. To close the drain line 13, the bore 36 is covered by the piston 35. To open the drain line 13, the bore 36 is uncovered.

In the following, the functionality of the of the electrohydraulic thermostat system 8 is explained with reference to Figs. 2 to 5. Fig. 2 shows the electrohydraulic thermostat system 8 in a switch off mode M1. In the switch off mode M1, the system 3, for example an internal combustion machine, is stopped. The working fluid 2 is not pressurized. The pilot valve 9 is not energized so that the piston 35 is in an initial position. In the initial position of the piston 35, the piston 35 covers the bore 36 completely so that the drain line 13 is closed.

Due to the controlled leakage gap 27, the pressure in the fluid distribution chamber 30 and in the control chamber 31 is the same. Thus, the elastic element 32 presses the valve body 23 against the shoulder 34 of the housing 22. The second outlet opening 25 of the valve body 23 overlaps the bypass line 21 so that the bypass line 21 is completely open. The pressure line 7 is thus fluidly connected to the bypass line 21. The first outlet opening 24 of the valve body 23 is completely covered by the housing 22 so that the first outlet opening 24 is closed.

The inflow line 15 of the heat exchanger 14 is covered by the valve body 23 so that the inflow line 15 is at least partly closed. The fail safe opening 28 of the valve body 23 overlaps the inflow line 15 so that the inflow line 15 is also fluidly connected to the pressure line 7. The fail safe opening 28 provides a flow of working fluid 2 to the heat exchanger 14 in the case that the pilot valve 9 does not work, i.e. stays in its closed state.

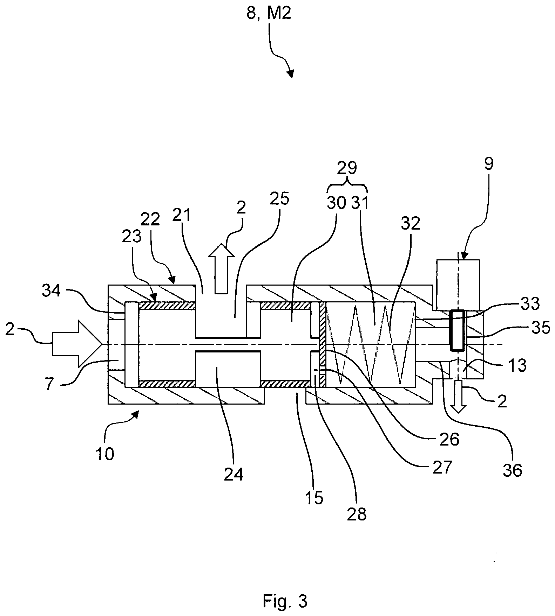

Fig. 3 shows the electrohydraulic thermostat system 8 in a bypass mode M2. The system 3 is running under normal condition and the working fluid 2 is pressurized. The pilot valve 9 is energized to open the bore 36 at least partly to discharge part of the working fluid 2 into the reservoir 4. The power consumption of the pilot valve 9 does not exceed 5 W. Opening the bore 36 results in a pressure release in the control chamber 31. Thus, the pressure in the fluid distribution chamber 30 is higher than in the control chamber 31. The pressurized working fluid 2 moves the valve body 23 to the right and thus compresses the elastic element 32. The valve body 23 makes an axial movement of around 5 mm.

The valve body 23 covers the inflow line 15 completely so that there is no flow of working fluid 2 to the heat exchanger 14. The second outlet opening 25 overlaps the bypass line 21 so that the working fluid 2 is directly guided to the filter 17. Except for a leakage flow of working fluid 2 trough the drain line 13, in the bypass mode M2 there is 100 % flow of working fluid 2 to the bypass line 21 and 0 % flow of working fluid 2 to the inflow line 15.

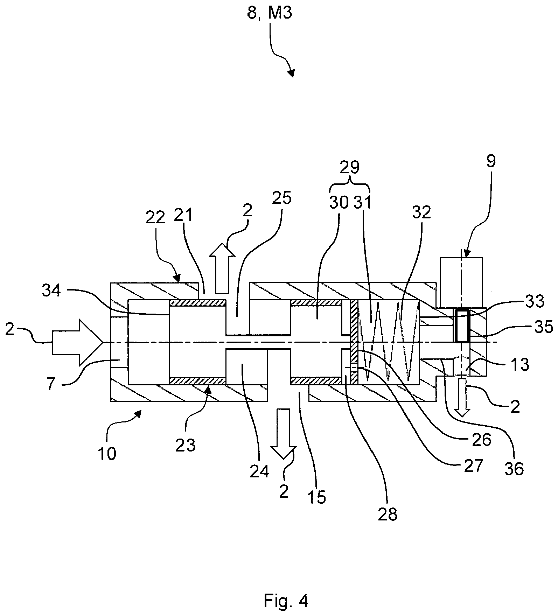

Fig. 4 shows the electrohydraulic thermostat system 8 in a control mode M3. In the control mode M3, the system 3 is running under hot conditions. The pilot valve 9 is controlled in a closed loop by means of the control unit 12. The control mode M3 allows to divide the flow of working fluid 2 between the bypass line 21 and the inflow line 15 of the heat exchanger 14 depending on the demand of the system 3. In other words, the first outlet opening 24 overlaps the inflow line 15 so that the inflow line 15 is fluidly connected to the pressure line 7 and the second outlet opening 25 overlaps the bypass line 21 so that the bypass line 21 is also fluidly connected to the pressure line 7. The pilot valve 9 can allow a binary adjustment. However, the pilot valve 9 can also allow and adjustment of intermediate pressure levels, for example by setting intermediate switching positions and/or a pulsed actuation thereof.

The bore 36 is opened by retracting the piston 35. The movement of the piston 35 allows a specific pressure decrease in the control chamber 31. The valve body 23 is moved by the pressure difference between the fluid distribution chamber 30 and the control chamber 31. The more the piston 35 is retracted from the bore 36, the further the valve body 23 moves to the right thus closing the bypass line 21 and opening the inflow line 15 of the heat exchanger 14.

The valve body 23 makes an axial movement of around 5 to 21 mm. Depending on the temperature of the working fluid 2, there is either guided more working fluid 2 to the bypass line 21 or to the inflow line 15. Higher temperatures result in a higher volume flow of working fluid 2 to the heat exchanger 14 to cool the working fluid 2 down. Lower temperatures result in a higher volume flow of working fluid 2 to the bypass line 21 to bypass the heat exchanger 14.

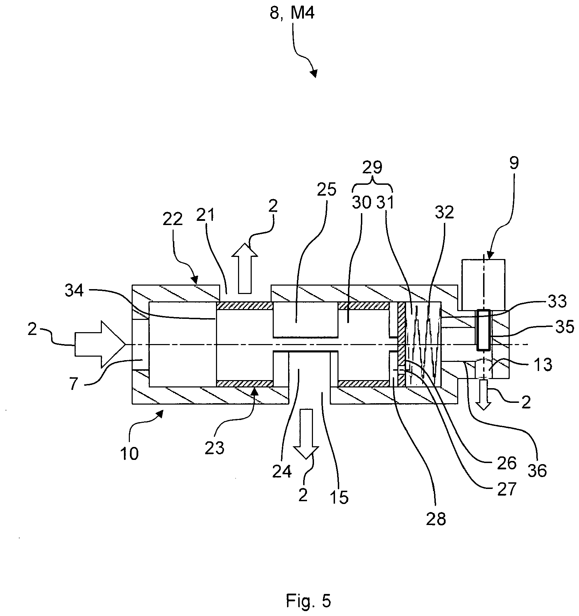

Fig. 5 shows the electrohydraulic thermostat system 8 in a working mode M4. The working mode M4 can be named cooler mode. In the working mode M4, the system 3 is running under hot conditions. The pilot valve 9 keeps being energized to open the bore 36 completely. The power consumption of the pilot valve 9 does not exceed 24 W. By opening the bore 36 completely,the pressure drop between the fluid distribution chamber 30 and the controll chamber 31 increases so that the pressure of the working fluid 2 being supplied by the pressure line 7 moves the valve body 23 further to the right. The valve body 23 makes a linear movement of 21 mm. In the working mode M4, the bypass line 21 is completely closed and the inflow line 15 of the heat exchanger 14 is completely open so that the heat exchanger 14 gets 100 % of the working fluid 2 and the bypass line 21 gets 0 % of the working fluid 2.

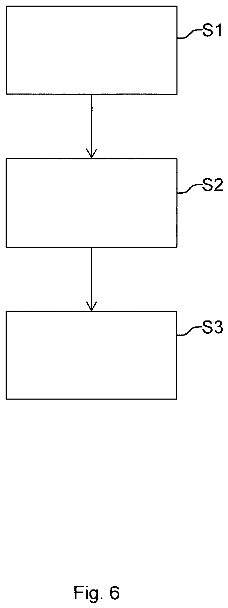

Fig. 6 shows a schematic block diagram of one embodiment of a method for controlling the temperature of the working fluid 2. In a step S1 the pressure difference between the fluid distribution chamber 30 and the control chamber 31 is generated as a function of the temperature of the working fluid 2 by means of the pilot valve 9. In other words, when the temperature increases, the pilot valve 9 moves its piston 35 to open the drain line 13. This leads to a pressure drop in the control chamber 31.

Due to the generation of the pressure difference, in a step S2 the valve body 23 is moved in the receiving section 29 for opening and closing the inflow line 15 and/or the bypass line 21 by means of the working fluid 2. In a step S3 the temperature of the working fluid 2 is controlled by means of the heat exchanger 14. "Controlled" in this context means that the temperature of the working fluid 2 is kept in a predetermined temperature range. For example, if the temperature of the working fluid 2 is too high, the valve body 23 is moved to further open the inflow line 15. More working fluid 2 is thus guided to the heat exchanger 14 to cool the working fluid 2 down.

### Reference signs:

- 1: Filter device
- 2: Working fluid
- 3: System
- 4: Reservoir
- 5: Pump
- 6: Intake line
- 7: Pressure line
- 8: Electrohydraulic thermostat system
- 9: Pilot valve
- 10: Main valve
- 11: Temperature sensor
- 12: Control unit
- 13: Drain line
- 14: Component/Heat exchanger
- 15: Inflow line
- 16: Discharge line
- 17: Filter
- 18: Bypass line
- 19: Check valve
- 20: Discharge line
- 21: Bypass line
- 22: Housing
- 23: Valve body
- 24: First outlet opening
- 25: Second outlet opening
- 26: Divider plate
- 27: Controlled leakage gap
- 28: Fail safe opening
- 29: Receiving section
- 30: Fluid distribution chamber
- 31: Controll chamber
- 32: Elastic element
- 33: Shoulder
- 34: Shoulder
- 35: Piston
- 36: Bore

- M1: Switch off mode
- M2: Bypass mode
- M3: Control mode
- M4: Working mode
- S1: Step
- S2: Step
- S3: Step

## Claims

1. Electrohydraulic thermostat system (8) for a filter device (1), comprising a main valve (10) and a pilot valve (9), wherein the main valve (10) comprises a valve body (23) which is arranged in a receiving section (29) of a housing (22), wherein the valve body (23) subdivides the receiving section (29) into a fluid distribution chamber (30), which receives a pressurized working fluid (2) through a pressure line (7) and is configured to distribute the working fluid (2) to an inflow line (15) of a component (14) for changing a temperature of the working fluid (2) and/or to a bypass line (21) for bypassing the component (14), and a control chamber (31), wherein the pilot valve (9) is configured to cause a pressure difference between the fluid distribution chamber (30) and the control chamber (31) as a function of the temperature of the working fluid (2) so that the valve body (23) in the receiving section (29) is movable due to the pressure difference of the working fluid (2), wherein a movement of the valve body (23) causes the inflow line (15) and/or the bypass line (21) to selectively at least partially open and/or close,
wherein the valve body (23) comprises a divider plate (26) which subdivides the receiving section (29) into the fluid distribution chamber (30) and the control chamber (31), and **characterized in that**
the divider plate (26) has a predetermined radial clearance against the receiving section (29), wherein the predetermined radial clearance creates a controlled leakage gap for pressure equalization between the fluid distribution chamber (30) and the control chamber (31).

2. Electrohydraulic thermostat system according to claim 1, wherein in a bypass mode (M2) of the electrohydraulic thermostat system (8), the valve body (23) completely closes the inflow line (15) and opens the bypass line (21) to guide the working fluid (2) into the bypass line (21).

3. Electrohydraulic thermostat system according to claim 1 or 2, wherein in a working mode (M4) of the electrohydraulic thermostat system (8), the valve body (23) completely closes the bypass line (21) and opens the inflow line (15) to guide the working fluid (2) into the inflow line (15).

4. Electrohydraulic thermostat system according to one of the claims 1 - 3, wherein in a control mode (M3) of the electrohydraulic thermostat system (8), the valve body (23) opens the inflow line (15) and the bypass line (21) partially to guide the working fluid (2) into both the inflow line (15) and the bypass line (21).

5. Electrohydraulic thermostat system according to one of the claims 1 - 4, wherein the pilot valve (9) is configured to open and to close a drain line (13) to a reservoir (4) as a function of the temperature of the working fluid (2) to generate the pressure difference between the fluid distribution chamber (30) and the control chamber (31), wherein preferably the reservoir (4) is under atmospheric or close to atmospheric pressure.

6. Electrohydraulic thermostat system according to claim 5, wherein the pilot valve (9) comprises a piston (35) for opening and closing the drain line (13), wherein preferably the piston (35) closes the drain line (13) in an initial state of the pilot valve (9), and wherein the piston (35) opens the drain line (13) in an energized state of the pilot valve (9).

7. Electrohydraulic thermostat system according to one of the claims 1 - 6, wherein the divider plate (26) comprises a controlled leakage gap (27) for pressure equalization between the fluid distribution chamber (30) and the control chamber (31).

8. Electrohydraulic thermostat system according to one of the claims 1 - 7, wherein the inflow line (15) and the bypass line (21) are fluidically connected with the fluid distribution chamber (30) at axially spaced positions.

9. Electrohydraulic thermostat system according to one of the claims 1 - 8, wherein the valve body (23) is at least partially hollow and preferably comprises at least one radial outlet opening (24, 25), preferably a radial first outlet opening (24), which is assigned to the inflow line (15), and a radial second outlet opening (25), which is assigned to the bypass line (21).

10. Electrohydraulic thermostat system according to claim 9, wherein the valve body (23) comprises two axially spaced cylinder shells, wherein the at least one radial outlet opening (24,25) is arranged between the two axially spaced cylinder shells.

11. Electrohydraulic thermostat system according to one of the claims 1 - 10, further comprising an elastic element (32) which biases the valve body (23) against a pressure of the working fluid (2), wherein the elastic element (32) preferably is arranged inside the control chamber (31).

12. Electrohydraulic thermostat system according to one of the claims 1 - 11, further comprising a temperature sensor (11) and/or a control unit (12) for operating the pilot valve (9).

13. Electrohydraulic thermostat system according to one of the claims 1 - 12, wherein the electrohydraulic thermostat system (8) comprises at least one sensor being adapted for determining a position of the valve body (23) in the receiving section (29), wherein preferably the sensor comprises a first sensor part arranged on the valve body (23) and a second sensor part arranged on the housing (22).

14. Filter device (1), comprising an electrohydraulic thermostat system (8) according to one of the claims 1 - 13, a component (14) for changing a temperature of a working fluid (2), wherein the component (14) is arranged downstream of the electrohydraulic thermostat system (8), a filter (17) for filtering the working fluid (2), wherein the filter (17) is arranged downstream of the component (14), an inflow line (15) which connects the component (14) to the electrohydraulic thermostat system (8), and a bypass line (21) which bypasses the component (14).

15. Filter device (1) accoording to claim 14, wherein the drain line (13) is connected to a reservoir (4) containing the working fluid (2), wherein preferably the reservoir (4) is under atmospheric or close to atmospheric pressure.

## Patentansprüche

1. Elektrohydraulisches Thermostatsystem (8) für eine Filtervorrichtung (1), umfassend ein Hauptventil (10) und ein Vorsteuerventil (9), wobei das Hauptventil (10) einen Ventilkörper (23) umfasst, der in einem Aufnahmeabschnitt (29) eines Gehäuses (22) angeordnet ist, wobei der Ventilkörper (23) den Aufnahmeabschnitt (29) in eine Fluidverteilerkammer (30), die ein unter Druck stehendes Arbeitsfluid (2) über eine Druckleitung (7) aufnimmt und so konfiguriert ist, dass sie das Arbeitsfluid (2) an eine Zuflussleitung (15) einer Komponente (14) zum Ändern einer Temperatur des Arbeitsfluids (2) und/oder an eine Bypassleitung (21) zum Umgehen der Komponente (14) verteilt, und eine Steuerkammer (31) unterteilt, wobei das Vorsteuerventil (9) so konfiguriert ist, dass es eine Druckdifferenz zwischen der Fluidverteilerkammer (30) und der Steuerkammer (31) in Abhängigkeit von der Temperatur des Arbeitsfluids (2) bewirkt, so dass der Ventilkörper (23) im Aufnahmeabschnitt (29) aufgrund der Druckdifferenz des Arbeitsfluids (2) beweglich ist, wobei eine Bewegung des Ventilkörpers (23) bewirkt, dass sich die Zuflussleitung (15) und/oder die Bypassleitung (21) selektiv mindestens teilweise öffnet und/oder schließt, wobei der Ventilkörper (23) eine Trennplatte (26) umfasst, die den Aufnahmeabschnitt (29) in die Fluidverteilerkammer (30) und die Steuerkammer (31) unterteilt, und **dadurch gekennzeichnet, dass** die Trennplatte (26) einen vorbestimmten radialen Abstand zum Aufnahmeabschnitt (29) hat, wobei der vorbestimmte radiale Abstand einen kontrollierten Leckagespalt für den Druckausgleich zwischen der Fluidverteilerkammer (30) und der Steuerkammer (31) erzeugt.

2. Elektrohydraulisches Thermostatsystem nach Anspruch 1, wobei in einer Bypass-Ausführung (M2) des elektrohydraulischen Thermostatsystems (8) der Ventilkörper (23) die Zuflussleitung (15) vollständig schließt und die Bypassleitung (21) öffnet, um das Arbeitsfluid (2) in die Bypassleitung (21) zu leiten.

3. Elektrohydraulisches Thermostatsystem nach Anspruch 1 oder 2, wobei in einer Ausführungsform (M4) des elektrohydraulischen Thermostatsystems (8) der Ventilkörper (23) die Bypassleitung (21) vollständig schließt und die Zuflussleitung (15) öffnet, um das Arbeitsfluid (2) in die Zuflussleitung (15) zu leiten.

4. Elektrohydraulisches Thermostatsystem nach einem der Ansprüche 1 bis 3, wobei in einer Steuerungsausführungsform (M3) des elektrohydraulischen Thermostatsystems (8) der Ventilkörper (23) die Zuflussleitung (15) und die Bypassleitung (21) teilweise öffnet, um das Arbeitsfluid (2) sowohl in die Zuflussleitung (15) als auch in die Bypassleitung (21) zu leiten.

5. Elektrohydraulisches Thermostatsystem nach einem der Ansprüche 1 bis 4, wobei das Vorsteuerventil (9) so konfiguriert ist, dass es eine Ablassleitung (13) zu einem Reservoir (4) in Abhängigkeit von der Temperatur des Arbeitsfluids (2) öffnet und schließt, um die Druckdifferenz zwischen der Fluidverteilerkammer (30) und der Steuerkammer (31) zu erzeugen, wobei das Reservoir (4) vorzugsweise unter atmosphärischem oder nahezu atmosphärischem Druck steht.

6. Elektrohydraulisches Thermostatsystem nach Anspruch 5, wobei das Vorsteuerventil (9) einen Kolben (35) zum Öffnen und Schließen der Ablassleitung (13) umfasst, wobei vorzugsweise der Kolben (35) die Ablassleitung (13) in einem Anfangszustand des Vorsteuerventils (9) schließt und wobei der Kolben (35) die Ablassleitung (13) in einem erregten Zustand des Vorsteuerventils (9) öffnet.

7. Elektrohydraulisches Thermostatsystem nach einem der Ansprüche 1 bis 6, wobei die Trennplatte (26) einen kontrollierten Leckagespalt (27) zum Druckausgleich zwischen der Fluidverteilerkammer (30) und der Steuerkammer (31) aufweist.

8. Elektrohydraulisches Thermostatsystem nach einem der Ansprüche 1 bis 7, wobei die Zuflussleitung (15) und die Bypassleitung (21) an axial beabstandeten Positionen fluidisch mit der Fluidverteilerkammer (30) verbunden sind.

9. Elektrohydraulisches Thermostatsystem nach einem der Ansprüche 1 bis 8, wobei der Ventilkörper (23) mindestens teilweise hohl ist und vorzugsweise mindestens eine radiale Auslassöffnung (24, 25) umfasst, vorzugsweise eine radiale erste Auslassöffnung (24), die der Zuflussleitung (15) zugeordnet ist, und eine radiale zweite Auslassöffnung (25), die der Bypassleitung (21) zugeordnet ist.

10. Elektrohydraulisches Thermostatsystem nach Anspruch 9, wobei der Ventilkörper (23) zwei axial beabstandete Mantelsegmente umfasst, wobei die mindestens eine radiale Auslassöffnung (24, 25) zwischen den beiden axial beabstandeten Mantelsegmenten angeordnet ist.

11. Elektrohydraulisches Thermostatsystem nach einem der Ansprüche 1 bis 10, ferner umfassend ein elastisches Element (32), das den Ventilkörper (23) gegen einen Druck des Arbeitsfluids (2) vorspannt, wobei das elastische Element (32) vorzugsweise innerhalb der Steuerkammer (31) angeordnet ist.

12. Elektrohydraulisches Thermostatsystem nach einem der Ansprüche 1 bis 11, ferner umfassend einen Temperaturfühler (11) und/oder eine Steuereinheit (12) zum Betätigen des Vorsteuerventils (9).

13. Elektrohydraulisches Thermostatsystem nach einem der Ansprüche 1 bis 12, wobei das elektrohydraulische Thermostatsystem (8) mindestens einen Sensor umfasst, der zur Ermittlung einer Position des Ventilkörpers (23) im Aufnahmeabschnitt (29) ausgelegt ist, wobei der Sensor vorzugsweise einen ersten, am Ventilkörper (23) angeordneten Sensorteil und einen zweiten, am Gehäuse (22) angeordneten Sensorteil umfasst.

14. Filtervorrichtung (1), umfassend ein elektrohydraulisches Thermostatsystem (8) nach einem der Ansprüche 1 bis 13, eine Komponente (14) zum Ändern einer Temperatur eines Arbeitsfluids (2), wobei die Komponente (14) stromabwärts des elektrohydraulischen Thermostatsystems (8) angeordnet ist, einen Filter (17) zum Filtern des Arbeitsfluids (2), wobei der Filter (17) stromabwärts der Komponente (14) angeordnet ist, eine Zuflussleitung (15), die die Komponente (14) mit dem elektrohydraulischen Thermostatsystem (8) verbindet, und eine Bypassleitung (21), die die Komponente (14) umgeht.

15. Filtervorrichtung (1) nach Anspruch 14, wobei die Ablassleitung (13) mit einem das Arbeitsfluid (2) enthaltenden Reservoir (4) verbunden ist, wobei das Reservoir (4) vorzugsweise unter atmosphärischem oder nahezu atmosphärischem Druck steht.

## Revendications

1. Système de thermostat électrohydraulique (8) destiné à un dispositif de filtre (1), comprenant une vanne principale (10) et une vanne pilote (9), dans lequel la vanne principale (10) comprend un corps de vanne (23) qui est agencé dans une section de réception (29) d'un boîtier (22), dans lequel le corps de vanne (23) subdivise la section de réception (29) en une chambre de distribution de fluide (30) qui reçoit un fluide de travail sous pression (2) par l'intermédiaire d'une conduite de pression (7) et est conçue pour distribuer le fluide de travail (2) à une conduite d'admission (15) d'un composant (14) destiné à changer une température du fluide de travail (2) et/ou à une conduite de contournement (21) destiné à contourner le composant (14), et une chambre de commande (31), dans lequel la vanne pilote (9) est configurée pour amener une différence de pression entre la chambre de distribution de fluide (30) et la chambre de commande (31) en fonction de la température du fluide de travail (2) de sorte que le corps de vanne (23) dans la section de réception (29) peut être déplacé en raison de la différence de pression du fluide de travail (2), dans lequel un movement du corps de vanne (23) amène la conduite d'admission (15) et/ou la conduite de contournement (21) à sélectivement s'ouvrir et/ou se fermer au moins partiellement, dans lequel le corps de vanne (23) comprend une plaque de division (26) qui subdivise la section de réception (29) en la chambre de distribution de fluide (30) et la chambre de commande (31), et **caractérisé en ce que** la plaque de division (26) a un jeu radial prédéterminé vis-à-vis de la section de réception (29), dans lequel le jeu radial prédéterminé crée un espace de fuite maîtrisée pour une égalisation de pression entre la chambre de distribution de fluide (30) et la chambre de commande (31).

2. Système de thermostat électrohydraulique selon la revendication 1, dans lequel, dans un mode de contournement (M2) du système de thermostat électrohydraulique (8), le corps de vanne (23) ferme complètement la conduite d'admission (15) et ouvre la conduite de contournement (21) pour guider le fluide de travail (2) vers la conduite de contournement (21).

3. Système de thermostat électrohydraulique selon la revendication 1 ou 2, dans lequel, dans un mode de travail (M4) du système de thermostat électrohydraulique (8), le corps de vanne (23) ferme complètement la conduite de contournement (21) et ouvre la conduite d'admission (15) pour guider le fluide de travail (2) vers la conduite d'admission (15).

4. Système de thermostat électrohydraulique selon l'une quelconque des revendications 1 à 3, dans lequel, dans un mode de commande (M3) du système de thermostat électrohydraulique (8), le corps de vanne (23) ouvre la conduite d'admission (15) et la conduite de contournement (21) partiellement pour guider le fluide de travail (2) aussi bien dans la conduite d'admission (15) que dans la conduite de contournement (21).

5. Système de thermostat électrohydraulique selon l'une quelconque des revendications 1 à 4, dans lequel la vanne pilote (9) est conçue pour ouvrir et pour fermer une conduite d'évacuation (13) vers un réservoir (4) en fonction de la température du fluide de travail (2) pour générer la différence de pression entre la chambre de distribution de fluide (30) et la chambre de commande (31), dans lequel de préférence le réservoir (4) est sous pression atmosphérique ou proche de la pression atmosphérique.

6. Système de thermostat électrohydraulique selon la revendication 5, dans lequel la vanne pilote (9) comprend un piston (35) pour l'ouverture et la fermeture de la conduite d'évacuation (13), dans lequel de préférence le piston (35) ferme la conduite d'évacuation (13) dans un état initial de la vanne pilote (9), et dans lequel le piston (35) ouvre la conduite d'évacuation (13) dans un état excité de la vanne pilote (9).

7. Système de thermostat électrohydraulique selon l'une quelconque des revendications 1 à 6, dans lequel la plaque de division (26) comprend un espace de fuite maîtrisée (27) pour une égalisation de pression entre la chambre de distribution de fluide (30) et la chambre de commande (31).

8. Système de thermostat électrohydraulique selon l'une quelconque des revendications 1 à 7, dans lequel la conduite d'admission (15) et la conduite de contournement (21) sont reliées fluidiquement à la chambre de distribution de fluide (30) au niveau de positions axialement espacées.

9. Système de thermostat électrohydraulique selon l'une quelconque des revendications 1 à 8, dans lequel le corps de vanne (23) est au moins partiellement creux et comprend de préférence au moins une ouverture de sortie radiale (24, 25), de préférence une première ouverture de sortie radiale (24) qui est attribuée à la conduite d'admission (15), et une deuxième ouverture de sortie radiale (25) qui est attribuée à la conduite de contournement (21).

10. Système de thermostat électrohydraulique selon la revendication 9, dans lequel le corps de vanne (23) comprend deux enveloppes cylindriques axialement espacées, dans lequel l'au moins une ouverture de sortie radiale (24, 25) entre les deux enveloppes cylindriques axialement espacées.

11. Système de thermostat électrohydraulique selon l'une quelconque des revendications 1 à 10, comprenant en outre un élément élastique (32) qui sollicite le corps de vanne (23) contre une pression du fluide de travail (2), dans lequel l'élément élastique (32) est de préférence agencé à l'intérieur de la chambre de commande (31).

12. Système de thermostat électrohydraulique selon l'une quelconque des revendications 1 à 11, comprenant en outre un capteur de température (11) et/ou une unité de commande (12) destinée à faire fonctionner la vanne pilote (9).

13. Système de thermostat électrohydraulique selon l'une quelconque des revendications 1 à 12, dans lequel le système de thermostat électrohydraulique (8) comprend au moins un capteur conçu pour déterminer une position du corps de vanne (23) dans la section de réception (29), dans lequel de préférence le capteur comprend une première partie de capteur agencée sur le corps de vanne (23) et une deuxième partie de capteur agencée sur le boîtier (22).

14. Dispositif de filtre (1), comprenant un système de thermostat électrohydraulique (8) selon l'une quelconque des revendications 1 à 13, un composant (14) destiné à changer une température d'un fluide de travail (2), dans lequel le composant (14) est agencé en aval du système de thermostat électrohydraulique (8), un filtre (17) destiné à filtrer le fluide de travail (2), dans lequel le filtre (17) est agencé en aval du composant (14), une conduite d'admission (15) qui raccorde le composant (14) au système de thermostat électrohydraulique (8), et une conduite de contournement (21) qui contourne le composant (14).

15. Dispositif de filtre (1) selon la revendication 14, dans lequel la conduite d'évacuation (13) est raccordée à un réservoir (4) contenant le fluide de travail (2), dans lequel de préférence le réservoir (4) est sous pression atmosphérique ou proche de la pression atmosphérique.
